## Europäisches Patentamt

## European Patent Office

## Office européen des brevets

(11) Publication number: **0 123 178**
**B1**

---

(12) **EUROPEAN PATENT SPECIFICATION**

(45) Date of publication of patent specification: **28.02.90**

(51) Int. Cl.⁵: **G 01 N 21/07, B 04 B 5/04**

(21) Application number: **84103733.6**

(22) Date of filing: **04.04.84**

---

(54) **Use of an analytical photometer, of centrifugal type, for the practically simultaneous determination of the presence of different substances in a certain number of discrete samples.**

---

(30) Priority: **13.04.83 IT 2056083**

(43) Date of publication of application:
**31.10.84 Bulletin 84/44**

(45) Publication of the grant of the patent:
**28.02.90 Bulletin 90/09**

(84) Designated Contracting States:
**AT BE CH DE FR GB LI NL SE**

(56) References cited:
**WO-A-82/00356**
**US-A-3 555 284**
**US-A-4 226 531**
**US-A-4 308 231**
**US-A-4 412 742**

(73) Proprietor: **INSTRUMENTATION LABORATORY S.p.A.**
**I-20128 Milano (IT)**

(72) Inventor: **Calzi, Claudio**
**Via Popoli Uniti, 8**
**I-20125 Milano (IT)**

(74) Representative: **Faraggiana, Vittorio, Dr. Ing. et al**
**Ingg. Guzzi e Ravizza S.r.l. Via Boccaccio, 24**
**I-20123 Milano (IT)**

---

## Description

This invention relates to the use of an analytical photometer of centrifugal type for the practically simultaneous determination of the presence of different substances in a certain number of discrete samples.

The term 'photometric' as used in the present description should not be considered in the restrictive sense but is broadened more generally to mean 'colorimetric' and 'spectrophotometric'.

Therefore in accordance with this use, the term 'photometric' is to be interpreted in its widest sense to cover those instruments denoted both as 'colorimetric' and 'spectrophotometric'. The term 'light' as used in this description includes the radiant energy both in visible spectrum and in the invisible spectrum, as well as in different wave lengths.

Hence it is interpreted as an invention involving systems using different types of radiations to carry out the required measurements.

An obvious inconvenience in the already known centrifugal analyzers is the necessity of preparing the samples for photometric analysis on different parameters, entailing heavy time losses due to restarts or the use of completely separate machines.

This situation limits analytical output, making it lengthy and time consuming.

The main object of the invention is to provide a photometric system capable of carrying out analyses on any number of discrete samples, each one of which requiring a different number of parameters, whereby the whole system is limited only by the number of cuvettes in the rotor. Hence the machine is capable of producing one or more diagnostic profiles on one or more patients. Moreover, it is also possible to carry out bichromatic and poly-chromatic analyses.

The known art has proposed analytical photometers that enable different analyses to be performed simultaneously on a plurality of samples. A typical example of such type of apparatus is shown in WO—A—8 200 356 and comprises a cuvette-set matrix which is disposed in an analyzer that comprises a corresponding stationary radiation-source matrix and a detector matrix.

Thus each detector makes a measurement in relation to one cuvette.

Such an apparatus permits a simultaneous analysis of a plurality of samples but has the drawback that each sample is analyzed by a separate detector, by means of light guided in a separate path, so that the results of each detector cannot be correctly compared with the results of the others, despite the accuracy of calibration of the apparatus.

In addition, with such an apparatus there is difficulty in controlling very rapid reactions, given the time required for disposing the detectors proximally to all the cuvettes, after the reagent has been introduced into the cuvettes.

In the document US—A—4 308 231 there is described a photometer that provides for a rotor comprising a plurality of cuvettes that are brought by slow rotation into a position of correspondence with one or more photodetectors, so that different measurements can be made on each cuvette; as a typical example, this type of apparatus provides that a cuvette passes into a position corresponding with a single detector every six seconds.

According to this solution there have to be compared the signals emitted by different detectors which subsequently analyze the sample contained in a cuvette; this calls for a complex processing of the signals of the detectors with an A/D conversion.

With such an apparatus it is in any case impossible to perform a continuous analysis of a plurality of samples.

The problem of performing simultaneously of a sinle analysis on a plurality of samples has been resolved with the single channel centrifugal photometer illustrated in US—A—3 555 284. Such an apparatus can employ a multi-cuvette rotor forming subject matter of US—A—4 226 531.

The rapid rotation of the rotor causes the introduction of a reagent into each cuvette at one-and-the-same moment, and the high frequency with which each cuvette passes to a position corresponding with a photodetecting unit makes it possible to obtain analytical results from each cuvette in a practically continuous manner, values being read many times per second. The known art prescribed the use of this advantageous type of photometer for determining the presence of a common substance in a multiplicity of samples.

In order to perform different analyses with light of different wavelength, such a centrifugal analyzer requires changing of the filters that are provided proximally to the light emission unit and the light detector.

According to the invention, it has been found that a centrifugal analyzer can be used advantageously also for achieving a result other than that for which it was proposed, i.e. that of analyzing a single reaction in a plurality of samples.

According to the invention it has been found that, contrary to what was prescribed in the known art, this type of apparatus can also be used to perform different simultaneous analyses on different samples in which different reactions occur or in which a different reaction occurs. The nature of the apparatus is such that it determines a one-and-the-same instant of initiation of the different reactions in the samples, since the reagents are mixed with the samples at the same time.

The objects of the invention will become more apparent from a careful examination of the detailed description that follows, with reference to the appended drawings.

The subject matter of the invention is claimed in claim 1.

The progress achieved with the use of a centrifugal analyzer according to this invention, as compared with the solutions already known in the art, is therefore quite appreciable.

In fact, also in the photometer used, the solution-holding compartments are designed and dimensioned to retain the liquid when the rotor is stationary and to transfer said liquid to the cuvettes when the rotor is rotating.

The novelty of the use of a centrifugal photometer in accordance with the invention consists in the fact that the beams of the light source — which can be single or multiple — provided in said photometer can be transmitted simultaneously through a system of suitable means, preferably optical fibres, or else prisms or mirrors, to various photodetector units, aligned with the windows, in order to determine the concentration of the chemical solutions through the absorbance of the light, in the sample/samples mixed with specific reagents, contained in the cuvettes, at different wave lengths. The output data of each photodetector unit is indicating the phototransmittance of the samples contained in each cuvette. Therefore, with the use of the photometer described in the invention it is possible for the first time to analyze practically simultaneously a certain number of samples and each sample for any required number of parameters, the only limitation being the number of cuvettes in the rotor.

Embodiments of the subject-matter of Claim 1 are defined in Claims 2 to 6. The accompanying drawings, taking into account that this is only a general example, illustrate a preferred embodiment of the photometer used in accordance with the invention. In these drawings:

figure 1 is a diametral section and partial view of the base comprising the turntable incorporating various cuvettes, while figure 2 is a plan view of figure 1 with certain parts removed;

figure 3 is similar to figure 1 but illustrates the turntable detached from its base;

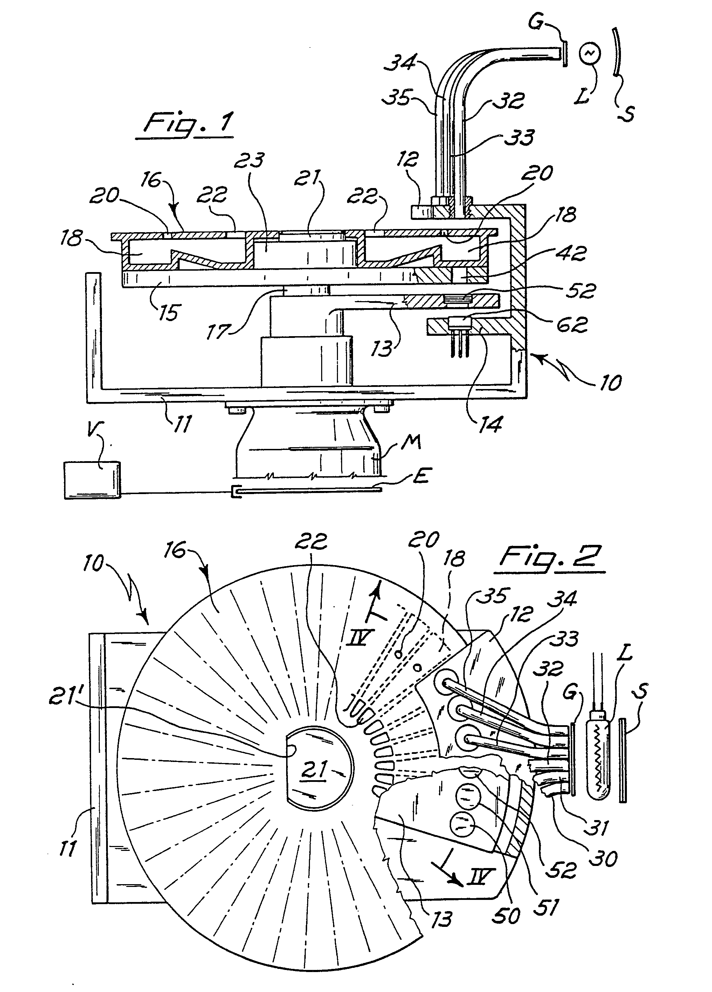

lastly figure 4 is a development of section IV—IV of figure 2.

As can be seen from the drawing, the analytical photometer used in accordance with the invention and denoted as a whole in the figure by the number 10, essentially comprises a fixed base 11, supported by a motor M and a revolving rotor 16 with members 15, 17, of which member 15 serves as a support for said rotor 16 while the other member 17 is an integral part of member 15 and of the shaft of motor M.

The optical fibres 30 to 35 (six as in the figure or more) are connected through suitable jointing to member 12 on base 11.

The beam of the light source L (just one in the drawing) provided between a mirror or screen S and an athermic filter G, is transmitted to said optical fibres 30 to 36.

The rotor 16, which the art is essentially acquainted with, incorporates forty or more cuvettes 18, arranged radially side-by-side.

Upper holes 22 and 20, drilled aboved each cuvette 18, serve for dispensing the liquid into each of these cuvettes, or rather the discrete sample and the necessary chemical reagent optimized for a specific wave length.

Naturally, the samples are mixed with the reagents by centrifugal force when rotor 16 starts rotating steadily.

The holes (40 to 45 in figure 4) drilled in base 15 are the same number as the cuvettes 18. Upon rotation, they are made to coincide one at a time with one of the optical fibres (30 to 35 in the figure) or with the other equivalent means provided for transmission of the light beam coming from L. Therefore, this light beam is transmitted (as shown in the figure by optical fibres) through the various chemical solutions one at a time contained in the same number of cuvettes 18. Then it passes through holes 40 to 45 and interference filters 50 to 55, thereby reaching the same number of photodetectors 60 to 65, aligned with the transparent windows of above mentioned cuvettes 18, and said photodetectors being capable of determining the absorbance in the discrete samples contained in said cuvettes 18, at a specific wave length. The electrical signals generated by photodetectors 60 to 65 are sent to a processor V.

An optical decoder E (sketched in the figure with a rectangle) is likewise appropriately provided. Said decoder decoder supplies an electrical synchronizing signal for each reading position of cuvette 18 to said processor V.

As the optical fibres 30 to 35 used and therefore the simultaneously analyzed chemical solutions contained in the cuvettes as well as the relative photodetectors 60 to 65 used are six in number (as in the figure) or even more.

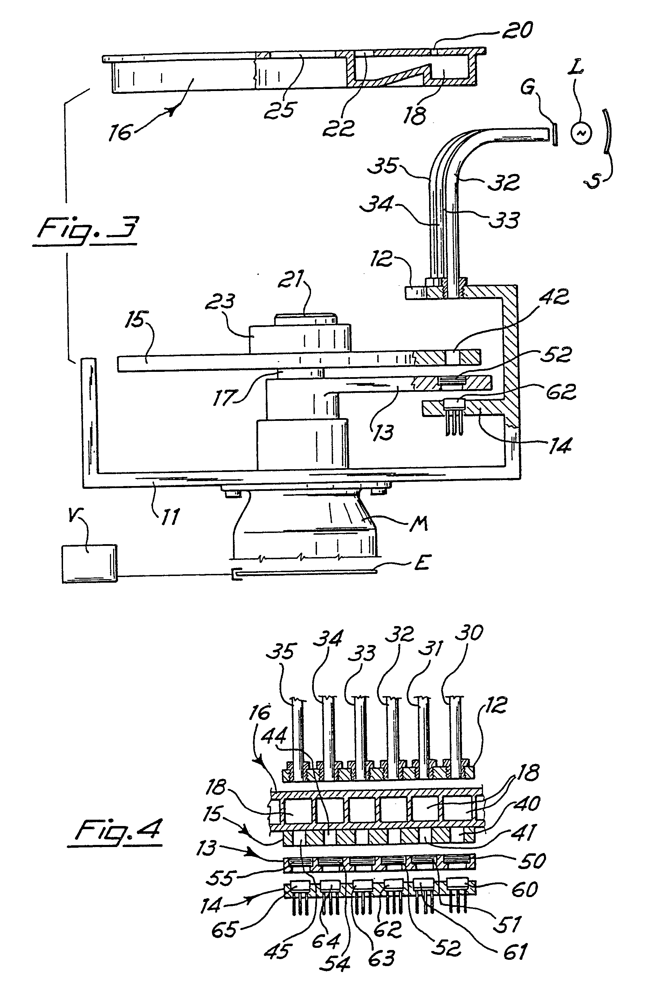

By way of completion, in figures 1 and 3 of the drawings, the numbers 21 and 23 denote two overlapping members integral with base plate 15 of rotor 16, said members being exactly seated in the central recess 25 and in the one below it, said recesses being incorporated in rotor 16, so as to render said rotor integral and rotatable with its base 15.

13 and 14 denote the sectors to whch are applied interference filters 50 to 55 and photodetectors 60 to 65 respectively.

Lastly, in figure 2 the number 21' denotes an upper retaining wall of member 21.

It has already been stated that the suitable means for simultaneously transmitting the light beam at multiple points need not only consist of optical fibres, but may consist of mirrors, prisms, or other equivalent means.

It goes without saying that their number as well as that of the interference filters and of the photodetectors can be higher or lower than that illustrated, and likewise, variations may be made to the number of cuvettes included in the rotor, to their section shape and moreover to that of the windows for addition of the discrete samples and reagents respectively in said cuvettes.

## Claims

1. The use of a centrifugal analyzer having a support for receiving and horizontally supporting a multicuvette rotor for rotation about a stationary vertical axis, said rotor containing a circumferential array of cuvettes extending radially outwardly from adjacent the center of said rotor, each said cuvette including a structure defining a first chamber for receiving a first constituent, a second chamber for receiving a second constituent, a divider between said first and second chambers, a transfer passage through which, during rotation of said rotor, said first constituent flows for forming a reaction product with said second constituent, and an analysis region adjacent the radially outer wall of each cuvette where said reaction product is subjected to analysis, the analysis regions of said rotor being disposed circumferentially about the periphery of said rotor, an apparatus for driving said rotor support, means operative during rotation of said rotor for simultaneously analyzing a plurality of said reaction products, said means including a plurality of stationary analysis channels disposed along said circular path adjacent the periphery of said rotor, said analysis channels including means for directing radiation continuously into a predetermined plurality of said analysis regions as said analysis regions are moved along said path, a plurality of stationary radiation sensors equal in number to said channels, aligned with said channels and said radiation directing means and receiving radiation emitted from analysis regions of the cuvettes, the radiation sensors generating output signals as a function of said emitted radiation, and a processor apparatus connected to said radiation sensors receiving concurrently said output signals while said driving apparatus is driving said rotor in rotation, and being responsive to said output signals to provide analytical data on preselected parameters of the reaction products in said analysis regions, the analyzer measuring, at different wave lengths, almost instantaneously through the processor apparatus the concentration of the reaction products by means of the absorbance or the transmittance in the sample or samples contained in the cuvettes.

2. The use according to claim 1 wherein the analyzer comprises a fixed frame structure supporting components of said analysis channels in optical alignment, said radiation directing means including means fixed on said frame structure for transmitting radiation from a single, or multiple light source simultaneously on to transparent windows of the analysis regions of said aligned cuvettes, and said analysis channels further including a corresponding plurality of various interference filters fixed on said frame structure.

3. The use according to claim 1 wherein the analyzer further comprises means for supplying an electrical synchronizing signal for each reading position of said cuvettes, and for transmitting said synchronizing signal to said processor apparatus.

4. The use according to claim 1 wherein the analyzer further comprises a radiation source, said source being arranged between a mirror and an athermic filter for supplying said radiation to said analysis channels.

5. The use according to claim 1 wherein the analyzer further comprises optical fibers contained within said radiation directing means.

6. The use according to claim 1 wherein the analyzer further comprises means for limiting the radiation transmitted through said analysis regions to specific wave lengths.

**Patentansprüche**

1. Benutzung eines Zentrifugalanalysators, der eine Halterung, um einen Mehrküvettenrotor aufzunehmen und horizontal zu tragen, so daß er um eine ortsfeste, vertikale Achse drehbar ist, wobei der Rotor am Umfang eine Anordnung von Küvetten besitzt, die von der Nähe des Mittelpunkts des Rotors radial nach außen verlaufen, wobei jede Küvette einen Aufbau aufweist, der eine erste Kammer, um einen ersten Gefügebestandteil aufzunehmen, eine zweite Kammer, um einen zweiten Gefügebestandteil aufzunehmen, ein Trennelement zwischen der ersten und der zweiten Kammer, einen Durchlaß, durch den während der Drehung des Rotors der erste Gefügebestandteil strömt, um ein Reaktionsprodukt mit dem zweiten Gefügebestandteil zu bilden, sowie einen Analysebereich neben der radialen Außenwand einer jeden Küvette bestimmt, in dem das Reaktionsprodukt einer Analyse unterworfen wird, wobei die Analysebereiche des Rotors am Umfang am Rand des Rotors angeordnet sind, eine Einrichtung, um die Rotorhalterung anzutreiben, eine Einrichtung, die während der Drehung des Rotors in Betrieb steht, um gleichzeitig eine Vielzahl von Reaktionsprodukten zu analysieren, wobei die Einrichtung eine Vielzahl von ortsfesten Analysekanälen aufweist, die längs der Kreisbahn neben dem Umfang des Rotors angeordnet sind, wobei die Analysekänale eine Einrichtung aufweisen, um eine Strahlung fortlaufend in eine vorgegebene Vielzahl der Analysebereiche zu richten, wenn die Analysebereiche entlang der Bahn bewegt werden, eine Vielzahl von ortsfesten Fühlern, deren Anzahl gleich der Anzahl der Kanäle ist, wobei die Fühler mit den Kanälen sowie mit der Einrichtunbg zum Richten der Strahlung ausgerichtet sind und eine Strahlung empfangen, die von den Analysebereichen der Küvetten ausgesandt wird, wobei die Strahlungsfühler Ausgangssignale als Funktion der ausgesandten Strahlung erzeugen, sowie eine Verarbeitungsstufe besitzt, die mit den Strahlungsfühlern verbunden ist, um gleichzeitig die Ausgangssignale zu empfangen, während die Antriebseinrichtung den Rotor in Drehung versetzt, wobei die Verarbeitungsstufe auf die Ausgangssignale anspricht, um Analysedaten von vorgewählten Parametern der Reaktionsprodukte in den Analysebereichen zu liefern, wobei der Analysator bei unterschiedlichen Wellenlängen fast unverzüglich über die Verarbeitungsstufe die Konzentration der Reaktionsprodukte über die Absorption oder die Durchlässigkeit in der oder den Proben mißt, die in den Küvetten enthalten sind.

2. Benutzung gemäß Anspruch 1, wobei der Analysator einen ortfesten Unterbau enthält, der Bauteile der Analysekanäle optisch ausgerichtet trägt, wobei die Einrichtung zum Richten der Strahlung eine Einrichtung aufweist, die auf dem Unterbau befestigt ist, um eine Strahlung von einer einzigen oder mehreren Lichtquellen gleichzeitig zu durchsichtigen Fenstern der Analysebereiche der ausgerichteten Küvetten zu übertragen, und wobei die Analysekanäle weiters eine entsprechende Vielzahl von verschiedenen Interferenzfiltern aufweisen, die auf dem Unterbau befestigt sind.

3. Benutzung gemäß Anspruch 1, wobei der Analysator weiters eine Einrichtung enthält, um ein elektrisches Synchronisiersignal für jede Ablesestelle der Küvetten zu liefern und das Synchronisiersignal zur Verarbeitungsstufe zu übertragen.

4. Benutzung gemäß Anspruch 1, wobei der Analysator weiters eine Strahlungsquelle enthält, wobei die Quelle zwischen einem Spiegel und einem wärmeundurchlässigen Filter angeordnet ist, um die Strahlung zu den Analysekanälen zu liefern.

5. Benutzung gemäß Anspruch 1, wobei der Analysator weiters optische Fasern enthält, die in der Einrichtung zum Richten der Strahlung enthalten sind.

6. Benutzung gemäß Anspruch 1, wobei der Analysator weiters eine Einrichtung enthält, um die Strahlung, die durch die Analysebereiche übertragen wird, auf bestimmte Wellenlängen zu begrenzen.

## Revendications

1. Utilisation d'un analyseur centrifuge comportant un support destiné à recevoir et supporter horizontalement un rotor à cuvettes multiples, destiné à tourner autour d'un axe vertical fixe, ledit rotor contenant un ensemble disposé circonférentiellement de cuvettes s'étendant radialement vers l'extérieur à partir de la zone proche du centre dudit rotor, chacune desdites cuvettes incluant une structure définissant une première chambre destinée à recevoir un premier constituant et une second chambre destinée à recevoir un second constituant, une séparation présente entre lesdites première et seconde chambres, un passage de transfert, dans lequel, pendant la rotation dudit rotor, ledit premier constituant circule pour former un produit de réaction avec ledit second constituant, et une région d'analyse située au voisinage de la paroi, extérieure du point de vue radial, de chaque cuvette et dans laquelle ledit produit de réaction est soumis à une analyse, les régions d'analyse dudit rotor étant disposées circonférentiellement sur la périphérie du rotor, un dispositif pour entraîner ledit support du rotor, des moyens agissant pendant la rotation dudit rotor pour analyser simultanément une pluralité desdits produits de réaction, lesdits moyens incluant une pluralité de canaux d'analyse fixes disposés le long dudit trajet circulaire au voisinage de la périphérie dudit rotor, lesdits canaux d'analyse incluant des moyens pour envoyer de façon continue un rayonnement dans une pluralité prédéterminée desdites régions d'analyse lorsque ces dernière se déplacent le long dudit trajet, une pluralité de capteurs fixes de rayonnement, présents en un nombre identique à celui desdits canaux et alignés avec lesdits canaux et lesdits moyens d'envoi du rayonnement, et pour recevoir le rayonnement émis par des régions d'analyse des cuvettes, les capteurs de rayonnement produisant des signaux de sortie en fonction dudit rayonnement èmis, et un dispositif formant processeur raccordé auxdits capteurs de rayonnement et recevant simultanément lesdits signaux de sortie alors que ledit dispositif d'entraînement entraîne le rotor en rotation, et sensible auxdits signaux de sortie de manière à produire des données analytiques concernant des paramètres présélectionnés des produits de réaction dans lesdites régions d'analyse, l'analyseur mesurant presque simultanément, pour différentes longueurs d'onde, au moyen du dispositif formant processeur, la concentration des produits de réaction au moyen du coefficient d'absorption et du coefficient de transmission dans le ou les échantillons contenus dans les cuvettes.

2. Utilisation selon la revendication 1, pour laquelle l'analyseur comprend une structure en forme de cadre fixe supportant des composants desdits canaux d'analyse, dans une position alignée optiquement, lesdits moyens d'envoi du rayonnement incluant des moyens fixés sur ladite structure en forme de cadre pour transmettre le rayonnement émanant d'une source de lumière unique ou multiple, simultanément à des fenêtres transparentes des régions d'analyse desdites cuvettes alignées, et lesdits canaux d'analyse comportant en outre un nombre correspondant de différents filtres d'interférence, fixés sur ladite structure en forme de cadre.

3. Utilisation selon la revendication 1, pour laquelle l'analyseur comporte en outre des moyens pour envoyer un signal électrique de synchronisation pour chaque position de lecture desdites cuvettes, et pour transmettre ledit signal de synchronisation audit dispositif formant processeur.

4. Utilisation selon la revendication 1, pour laquelle l'analyseur comporte en outre une source de rayonnement, ladite source étant disposée entre un miroir et un filtre athermique pour envoyer ledit rayonnement auxdits canaux d'analyse.

5. Utilisation selon la revendication 1, pour laquelle l'analyseur comporte en outre des fibres optiques contenues à l'intérieur desdits moyens d'envoi du rayonnement.

6. Utilisation selon la revendication 1, pour laquelle l'analyseur comporte en outre des moyens pour limiter le rayonnement transmis par lesdites régions d'analyse, à des longueurs d'onde spécifiques.

Fig. 1

Fig. 2

_Fig. 3_

_Fig. 4_